(19) Europäisches Patentamt
European Patent Office
Office européen des brevets

(11) **EP 4 679 534 A1**

(12) **EUROPEAN PATENT APPLICATION**
published in accordance with Art. 153(4) EPC

(43) Date of publication:
**14.01.2026 Bulletin 2026/03**

(21) Application number: **24767263.7**

(22) Date of filing: **08.03.2024**

(51) International Patent Classification (IPC):
*H01M 4/587* [(2010.01)]  *C01B 32/21* [(2017.01)]
*H01M 4/36* [(2006.01)]  *H01M 4/1393* [(2010.01)]

(52) Cooperative Patent Classification (CPC):
**C01B 32/21; H01M 4/1393; H01M 4/36;
H01M 4/587;** Y02E 60/10

(86) International application number:
**PCT/JP2024/009184**

(87) International publication number:
**WO 2024/185898 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.03.2023 JP 2023035960**

(71) Applicant: **Mitsubishi Chemical Corporation
Tokyo 100-8251 (JP)**

(72) Inventors:
• **YUASA, Ryuuto
  Tokyo 100-8251 (JP)**
• **ISHIWATARI, Nobuyuki
  Tokyo 100-8251 (JP)**
• **YOKOMIZO, Masakazu
  Tokyo 100-8251 (JP)**

(74) Representative: **Vossius & Partner
Patentanwälte Rechtsanwälte mbB
Siebertstrasse 3
81675 München (DE)**

(54) **CARBON MATERIAL, NEGATIVE ELECTRODE, SECONDARY BATTERY, METHOD FOR MANUFACTURING CARBON MATERIAL, METHOD FOR MANUFACTURING NEGATIVE ELECTRODE, AND METHOD FOR MANUFACTURING SECONDARY BATTERY**

(57) An object of the present invention is to provide: a carbon material that suppresses diffusion resistance of the secondary battery and improves rapid charging characteristics of the secondary battery when the carbon material is used in a negative electrode of the secondary battery; and a method for manufacturing the carbon material. The present invention relates to a carbon material containing graphite particles. The graphite particles are natural graphite coated with an amorphous carbonaceous substance. Moreover, in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 $g/cm^3$, an orientation parameter intensity ratio I(002)/I(110) calculated from an intensity ratio of peaks corresponding to lattice planes (110) and (002), and I(002) and I(110) are obtained by a wide-angle X-ray diffraction measurement, is from 200 to 1200.

EP 4 679 534 A1

## Description

Technical Field

The present invention relates to a carbon material, a negative electrode, a secondary battery, a method for manufacturing a carbon material, a method for manufacturing a negative electrode, and a method for manufacturing a secondary battery.

Background Art

In recent years, with an advance in miniaturization of electronic devices, demands for high-capacity secondary batteries have increased significantly. Particularly, lithium-ion secondary batteries are gaining attention. Lithium-ion secondary batteries exhibit higher energy density and superior large current charging/discharging characteristics as compared with nickel-cadmium batteries or nickel-hydrogen batteries. The lithium-ion secondary batteries that have been developed and put to practical use include a nonaqueous lithium secondary battery including a positive electrode and a negative electrode both capable of storing and releasing lithium ions, and a nonaqueous electrolytic solution in which a lithium salt such as $LiPF_6$ or $LiBF_4$ is dissolved.

In the related art, extensive studies have been conducted for improving the performance of lithium-ion secondary batteries. In recent years, demands for a further performance improvement of lithium-ion secondary batteries have increased. For example, Patent Literature 1 discloses that, by using, as a negative electrode material for a nonaqueous secondary battery, a negative electrode material using a graphite raw material with a ratio (a mercury extrusion amount)/(a mercury intrusion amount) as measured by mercury porosimetry controlled in a specific range, a high capacity nonaqueous secondary battery can be provided, which excels in rapid charging characteristics with small electrode plate swelling after a charging/discharging cycle.

Citation List

Patent Literature

Patent Literature 1: JP 2021-158044 A

Summary of Invention

Technical Problem

However, it has been found that when a carbon material having an orientation parameter intensity ratio I(002)/I(110) of greater than 1200 is used in a negative electrode of a secondary battery as in Patent Literature 1, there is room for improvement in terms of the diffusion resistance and rapid charging characteristics of the secondary battery.

The present invention was developed in view of such problems, and an object of the present invention is to provide a carbon material which, when used in a negative electrode of a secondary battery, suppresses diffusion resistance of the secondary battery and improves rapid charging characteristics of the secondary battery, and to provide a method for manufacturing the carbon material.

Solution to Problem

As a result of intensive studies to solve the above problems, the present inventors discovered that, by setting an orientation parameter intensity ratio I(002)/I(110), using peak intensities corresponding to specific lattice planes of a carbon material, in a specific range, when such a carbon material is used in a negative electrode of a secondary battery, the diffusion resistance of the secondary battery is suppressed, and the rapid charging characteristics of the secondary battery are improved, and thereby the present inventors arrived at the present invention.

Aspect 1 of the present invention is a carbon material containing graphite particles, wherein

the graphite particles are natural graphite coated with an amorphous carbonaceous substance, and
in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 $g/cm^3$, an orientation parameter intensity ratio represented by I(002)/I(110) is from 200 to 1200, where 1(110) is a peak intensity corresponding to a lattice plane (110) and I(002) is a peak intensity corresponding to a lattice plane (002), and both I(110) and I(002) are obtained by a wide-angle X-ray diffraction measurement.

Aspect 2 of the present invention is the carbon material according to aspect 1, wherein the orientation parameter intensity ratio represented by I(002)/I(110) is from 600 to 1200.

Aspect 3 of the present invention is the carbon material according to aspect 1 or 2, wherein in the electrode, an orientation parameter intensity ratio represented by I(004)/I(110) is from 10 to 50, where I(110) is the peak intensity corresponding to the lattice plane (110) and I(004) is a peak intensity corresponding to a lattice plane (004), and I(004) and I(110) are obtained by a wide-angle X-ray diffraction measurement.

Aspect 4 of the present invention is the carbon material according to any one of aspects 1 to 3, wherein the carbon material has a volume-based average particle size $D_{50}$ of from 8 $\mu$m to 20 $\mu$m.

Aspect 5 of the present invention is the carbon material according to any one of aspects 1 to 4, wherein a content of the amorphous carbonaceous substance is from 5 mass% to 20 mass% per 100 mass% of the carbon material.

Aspect 6 of the present invention is the carbon material according to any one of aspects 1 to 5, wherein the carbon material satisfies the following expression (1);

$$0 \leq (x - y) \leq 7 \ (1)$$

where x [$\mu$m] denotes a volume-based average particle size D50 of the carbon material and y [mass%] denotes a content of the amorphous carbonaceous substance in the carbon material.

Aspect 7 of the present invention is the carbon material according to any one of aspects 1 to 6, wherein the carbon material satisfies the following expression (2);

$$0.5 < y/x \ (2)$$

where x [$\mu$m] denotes the volume-based average particle size D50 of the carbon material of the present embodiment and y [mass%] denotes the content of the amorphous carbonaceous substance in the carbon material.

Aspect 8 of the present invention is the carbon material according to any one of aspects 1 to 8, wherein a content of the graphite particles contained in the carbon material is from 50 to 100 mass% per 100 mass% of the carbon material.

Aspect 9 of the present invention is a negative electrode containing the carbon material described in any one of aspects 1 to 8.

Aspect 10 of the present invention is a secondary battery including: a positive electrode and a negative electrode both capable of storing and releasing lithium ions; and an electrolyte, wherein
the negative electrode contains the carbon material described in any one of aspects 1 to 8.

Aspect 11 of the present invention is a method for manufacturing a carbon material, the method including the following steps (1) to (3), and
in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 g/cm$^3$, an orientation parameter intensity ratio represented by I(002)/I(110) being from 200 to 1200, where I(110) is a peak intensity corresponding to a lattice plane (110) and I(002) is a peak intensity corresponding to a lattice plane (002), and I(002) and I(110) are obtained by a wide-angle X-ray diffraction measurement.

Step (1): spheroidizing natural graphite
Step (2): subjecting the raw carbon material obtained in step (1) to an isotropic pressurization treatment
Step (3): coating the raw carbon material obtained in step (2) with an amorphous carbonaceous substance

Aspect 12 of the present invention is the method for manufacturing a carbon material according to aspect 11, wherein the step (1) is pulverizing the natural graphite and then spheroidizing the pulverized natural graphite.

Aspect 13 of the present invention is the method for manufacturing a carbon material according to aspect 11 or 12, the method further including adjusting the carbon material such that the carbon material satisfies the following expression (3);

$$0.5 < y/x \ (3)$$

where x [$\mu$m] denotes the volume-based average particle size D50 of the carbon material and y [mass%] denotes the content of the amorphous carbonaceous substance in the carbon material.

Aspect 14 of the present invention is a method for manufacturing a negative electrode, the method including applying the carbon material described in any one of aspects 1 to 8 onto a current collector.

Aspect 15 of the present invention is a method for manufacturing a secondary battery containing a positive electrode, a negative electrode, and an electrolyte, the method including applying the carbon material described in any one of aspects 1 to 8 onto a current collector to manufacture a negative electrode.

Advantageous Effects of Invention

The orientation parameter intensity ratio I(002)/I(110) that uses peak intensities corresponding to specific lattice planes of the carbon material of the present invention is in a specific range, and when this carbon material is used in a negative electrode of a secondary battery, diffusion resistance of the secondary battery is suppressed, and rapid charging characteristics of the secondary battery are improved.

Description of Embodiments

The present invention is explained in detail below, but these descriptions are merely examples of preferred embodiments and are not intended to limit the scope of the invention.

The wording "from X to Y" regarding a numerical range means a range that includes the numerical values of X and Y, and for example, "from 0 mass% to 100 mass%" means a range that is equal to or greater than 0 mass% and equal to or less than 100 mass%.

Carbon Material

The carbon material of one aspect of the present invention (hereinafter, referred to as "the present embodiment") is a carbon material containing graphite particles, wherein the graphite particles are natural graphite coated with an amorphous carbonaceous substance, and in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of $1.65 \, g/cm^3$, an orientation parameter intensity ratio represented by I(002)/I(110) is from 200 to 1200, where I(110) is a peak intensity corresponding to a lattice plane (110) and I(002) is a peak intensity corresponding to a lattice plane (002), and both I(110) and I(002) are obtained by a wide-angle X-ray diffraction measurement.

The carbon material of the present embodiment contains graphite particles, and these graphite particles are natural graphite coated with an amorphous carbonaceous substance. Such a carbon material provides excellent capacity retention characteristics in a battery. In addition, in the carbon material of the present embodiment, the specific orientation parameter intensity ratio I(002)/I(110) is from 200 to 1200. Such a carbon material provides excellent lithium ion diffusibility in a direction perpendicular to the current collector in the electrode. In the present specification, the graphite particles which are natural graphite coated with an amorphous carbonaceous substance are also simply referred to as "graphite particles".

A content of the graphite particles in the carbon material of the present embodiment is preferably from 50 to 100 mass% per 100 mass% of the carbon material. A lower limit thereof is more preferably 60 mass%, and still more preferably 70 mass%. The graphite particles in the carbon material may be of a single type or may be a mixture of two or more types.

Examples of components that the carbon material may contain in addition to the graphite particles include graphite particles not coated with an amorphous carbonaceous substance, and artificial graphite.

Natural Graphite and Amorphous Carbonaceous Substance

In the present specification, examples of the natural graphite include amorphous graphite, flaky graphite, and scaly graphite. Among these natural graphites, flaky graphite and scaly graphite are preferred because of having a high degree of graphitization and a small amount of impurities, and scaly graphite is more preferred.

In the present specification, the amorphous carbonaceous substance is preferably one obtained by converting an amorphous carbonaceous substance precursor described below into an amorphous carbon.

The carbon material of the present embodiment contains graphite particles which are natural graphite coated with an amorphous carbonaceous substance. That is, the carbon material of the present embodiment contains graphite particles, in which the surface of natural graphite is coated with an amorphous carbonaceous substance partially or entirely.

From the viewpoint of capacity and lithium ion diffusibility, a content of the amorphous carbonaceous substance in the carbon material of the present embodiment is preferably from 5 mass% to 20 mass%, preferably 7 mass% or greater, and more preferably 8 mass% or greater, and preferably 20 mass% or less, and more preferably 15 mass% or less, per 100 mass% of the carbon material.

In the present specification, the content of the amorphous carbonaceous substance in the carbon material is calculated by the following equation (4). That is, the content thereof is calculated from a mass of the carbon material and a mass of the amorphous carbonaceous substance before and after firing. In this case, the content is calculated assuming that before and after firing, there is no change in the mass of the carbon material not containing the amorphous carbonaceous substance.

Content of amorphous carbonaceous substance (mass%) = [(mass of amorphous carbonaceous substance-containing carbon material after firing - mass before firing of carbon material not containing amorphous carbonaceous substance)/(mass of amorphous carbonaceous substance-containing carbon material after firing)] $\times$ 100 

(4)

From the viewpoints of capacity and lithium ion diffusibility, a content of the natural graphite in the carbon material of the present embodiment is preferably from 80 mass% to 95 mass%, more preferably 85 mass% or greater, and more preferably 92 mass% or less per 100 mass% of the carbon material.

In the present specification, when the content of graphite particles is 100 mass% per 100 mass% of the carbon material, the content (mass%) of the natural graphite in the carbon material can be calculated by subtracting the content (mass%) of the amorphous carbonaceous substance in the carbon material as calculated by the above equation (4) from 100 (mass%).

From the viewpoints of capacity and lithium ion diffusibility, a ratio of the natural graphite to the amorphous carbonaceous substance in the carbon material of the present embodiment on a mass basis is preferably from 80:20 to 95:5, and more preferably from 85:15 to 92:8.

In the carbon material of the present embodiment, in order to adjust the orientation parameter intensity ratio, the natural graphite is preferably 19.0 times or less, more preferably 11.5 times or less, and still more preferably 8.1 times or less the amorphous carbonaceous substance on a mass basis.

Orientation Parameter Intensity Ratio

In the carbon material of the present embodiment, the orientation parameter intensity ratio represented by I(002)/I(110) is from 200 to 1200, where I(110) is the peak intensity corresponding to the lattice plane (110) and I(002) is a peak intensity corresponding to the lattice plane (002), and I(002) and I(110) are obtained by a wide-angle X-ray diffraction measurement. The carbon material can be adjusted to satisfy the above orientation parameter intensity ratio I(002)/I(110) by carrying out the steps (1) to (3) described below while adjusting the volume-based average particle size $D_{50}$ and the content of the amorphous carbonaceous substance.

Moreover, in the carbon material of the present embodiment, the orientation parameter intensity ratio represented by I(004)/I(110) is preferably from 10 to 50, where I(110) is the peak intensity corresponding to the lattice plane (110) and I(004) is a peak intensity corresponding to the lattice plane (004), and I(004) and I(110) are obtained by a wide-angle X-ray diffraction measurement.

I(002) indicates a peak intensity derived from a crystal having a lattice plane (002) of graphite, I(004) indicates a peak intensity derived from a crystal having a lattice plane (004) of graphite, and I(110) indicates a peak intensity derived from a crystal having a lattice plane (110) of graphite.

The lattice plane (002) indicates crystallinity in the layer direction of graphite. In particular, the peak intensity I(002) of the lattice plane (002) in the carbon material measurement indicates a degree of presence of the graphite layer parallel to the current collector. When the orientation parameter intensity ratio is within this range, the lithium ion diffusibility in the electrode in the direction perpendicular to the current collector is excellent.

The lattice plane (004) indicates crystallinity in the layer direction of graphite. In particular, the peak intensity I(004) of the lattice plane (004) in the carbon material measurement indicates a degree of presence of the graphite layer parallel to the current collector. When the orientation parameter intensity ratio is within this range, the lithium ion diffusibility in the electrode in the direction perpendicular to the current collector is excellent.

The lattice plane (110) indicates crystallinity in a direction perpendicular to the graphite layer. In particular, the peak intensity I(110) of the lattice plane (110) in the carbon material measurement indicates a degree of presence of the graphite layer in the direction perpendicular to the current collector. Therefore, by adjusting the peak intensity I(110), excellent lithium ion diffusibility in the electrode in the direction perpendicular to the current collector can be obtained.

The orientation parameter intensity ratios I(002)/I(110) and I(004)/I(110) each indicate how the crystals in the carbon material of the present embodiment are oriented with respect to the current collector.

In the carbon material of the present embodiment, the orientation parameter intensity ratio I(002)/I(110) is from 200 to 1200. When I(002)/I(110) is less than 200, a degree of contact between the active materials is reduced and, presumably, breakage of the conductive path may impair the battery characteristics. When I(002)/I(110) exceeds 1200, lithium ion diffusibility in the electrode in the direction perpendicular to the current collector is impaired. From the viewpoint of battery capacity, I(002)/I(110) is preferably 300 or greater, more preferably 500 or greater, and even more preferably 600 or greater, and is preferably 1150 or less, and more preferably 1100 or less.

The carbon material of the present embodiment with the orientation parameter intensity ratio I(004)/I(110) in a range from 10 to 50 advantageously achieves high capacity and excellent lithium ion diffusibility. From the viewpoint of battery capacity, I(004)/I(110) is more preferably 15 or greater and even more preferably 20 or greater, and is more preferably 45 or less and even more preferably 40 or less.

The orientation parameter intensity ratio represented by I(002)/I(110) and the orientation parameter intensity ratio represented by I(004)/I(110) are both indices for evaluating the plane orientation of the carbon material with respect to the current collector direction. Since the lattice plane (004) has a smaller interplanar spacing than the lattice plane (002), the orientation parameter intensity ratio represented by I(004)/I(110) can be used to evaluate, in greater detail, the structure of the carbon material, and particularly the structural distortion due to variation in the lamination interplanar spacing.

When the carbon material of the present embodiment contains two or more types of graphite particles, the orientation parameter intensity ratio of the carbon material is theoretically an average of the intensity ratios of each graphite particle according to the content proportion of each graphite particle, and therefore the content proportion of each graphite particle can be appropriately adjusted so as to satisfy the range of the intensity ratio described above.

Graphite Particles

The graphite particles will be described.

From the viewpoints of capacity and lithium ion diffusibility, a content of the natural graphite in the graphite particles is preferably from 80 mass% to 95 mass%, more preferably 85 mass% or greater, and more preferably 92 mass% or less per 100 mass% of the graphite particle.

From the viewpoints of capacity and lithium ion diffusibility, a ratio of the natural graphite to the amorphous carbonaceous substance in the graphite particles on a mass basis is preferably from 80:20 to 95:5, and more preferably from 85:15 to 92:8.

Moreover, in the graphite particles, in order to adjust the orientation parameter intensity ratio, the natural graphite is preferably 19.0 times or less, more preferably 11.5 times or less, and still more preferably 8.1 times or less the amorphous carbonaceous substance on a mass basis.

Orientation Parameter Intensity Ratio

In the graphite particles, the orientation parameter intensity ratio represented by I(002)/I(110) is preferably from 200 to 1200, where I(110) is the peak intensity corresponding to the lattice plane (110) and I(002) is the peak intensity corresponding to the lattice plane (002), and I(002) and I(110) are obtained by a wide-angle X-ray diffraction measurement. The graphite particles can be adjusted to satisfy the above orientation parameter intensity ratio I(002)/I(110) by carrying out the steps (1) to (3) described below while adjusting the volume-based average particle size $D_{50}$ and the content of the amorphous carbonaceous substance.

Moreover, in the graphite particles, the orientation parameter intensity ratio represented by I(004)/I(110) is preferably from 10 to 50, where 1(110) is the peak intensity corresponding to the lattice plane (110) and I(004) is the peak intensity corresponding to the lattice plane (004), and I(004) and I(110) are obtained by a wide-angle X-ray diffraction measurement.

The lattice plane (002) indicates crystallinity in the layer direction of graphite. In particular, the peak intensity I(002) of the lattice plane (002) in the graphite particles measurement indicates a degree of presence of the graphite layer parallel to the current collector. When the orientation parameter intensity ratio is within this range, the lithium ion diffusibility in the electrode in the direction perpendicular to the current collector is excellent.

The lattice plane (004) indicates the crystallinity in the layer direction of graphite. In particular, the peak intensity I(004) of the lattice plane (004) in the graphite particles measurement indicates a degree of presence of the graphite layer parallel to the current collector. When the orientation parameter intensity ratio is within this range, the lithium ion diffusibility in the electrode in the direction perpendicular to the current collector is excellent.

The lattice plane (110) indicates the crystallinity in a direction perpendicular to the graphite layer. In particular, the peak intensity 1(110) of the lattice plane (110) in the graphite particles measurement indicates a degree of presence of the graphite layer in the direction perpendicular to the current collector. Therefore, by adjusting the peak intensity I(110), excellent lithium ion diffusibility in the electrode in the direction perpendicular to the current collector can be obtained.

The orientation parameter intensity ratios I(002)/I(110) and I(004)/I(110) each indicate how the crystals of the graphite particles are oriented with respect to the current collector.

In the graphite particles, the orientation parameter intensity ratio I(002)/I(110) is preferably from 200 to 1200. When the intensity ratio thereof is within this range, a deterioration of battery characteristics due to breakage of a conductive path caused by reduction in a degree of contact between active materials is suppressed, and furthermore, lithium ion diffusibility in the electrode in the direction perpendicular to the current collector is excellent.

The graphite particles with the orientation parameter intensity ratio I(004)/I(110) in a range from 10 to 50 advantageously achieve high capacity and excellent lithium ion diffusibility. From the viewpoint of battery capacity, I(004)/I(110) is more preferably 15 or greater and even more preferably 20 or greater, and is more preferably 45 or less and even more preferably 40 or less.

Method for Measuring Orientation Parameter Intensity Ratio

A specific procedure for measuring the orientation parameter intensity ratio I(002)/I(110) and the orientation parameter intensity ratio I(004)/I(110) of the carbon material or graphite particles is as follows.

(A) Formation of Electrode

A binder resin and a dispersion medium are added to a carbon material or graphite particles to form a slurry. Specifically, the carbon material or graphite particles, an aqueous solution of styrene-butadiene rubber (SBR) as a binder resin, and an aqueous solution of carboxymethyl cellulose (CMC) as a thickener are mixed and stirred so that a mass ratio of the CMC and a mass ratio of the SBR are each 1 mass% in relation to a total mass of the mixture of the carbon material or graphite particles, the CMC, and the SBR after drying, and thereby a slurry is prepared. Here, water constituting the SBR and CMC aqueous solutions serves as a dispersion medium.

Next, the obtained slurry is applied onto a metal current collector and dried to form an active material layer on the current collector, and the active material layer is adjusted to a predetermined density. Specifically, a die coater is used to apply the obtained slurry onto a 10 $\mu$m thick copper foil current collector such that the negative electrode material adheres to the copper foil at 10.00 $\pm$ 0.20 mg/cm$^2$, and the applied slurry is dried. The coated copper foil is then roll-pressed using a roller such that the density of the active material layer becomes 1.65 g/cm$^3$ $\pm$ 0.03 g/cm$^3$, and thereby an electrode (negative electrode sheet) is obtained.

(B) Measurement of Orientation Parameter Intensity Ratio I(002)/I(110) or Orientation Parameter Intensity Ratio I(004)/I(110)

The orientation parameter intensity ratio I(002)/I(110) or the orientation parameter intensity ratio I(004)/I(110) of the carbon material of the active material layer on the current collector of the electrode after pressing is measured by wide-angle X-ray diffraction.

As a standard method for measuring the orientation parameter intensity ratio I(002)/I(110), an X-ray diffraction pattern obtained by a wide-angle X-ray diffraction measurement is fitted with an asymmetric Pearson VII peak function as a profile function to separate peaks, and the peak height intensity I(002) of the lattice plane (002) and the peak height intensity I(110) of the lattice plane (110) are calculated. Here, the peak height intensity means the value at the top of the peak. From the obtained peak height intensities, a ratio represented by (peak height intensity of the lattice plane (002))/(peak height intensity of the lattice plane (110)) is defined as I(002)/I(110).

As a standard method for measuring the orientation parameter intensity ratio I(004)/I(110), an X-ray diffraction pattern obtained by a wide-angle X-ray diffraction measurement is fitted with an asymmetric Pearson VII peak function as a profile function to separate peaks,, and the peak height intensity I(004) of the lattice plane (004) and the peak height intensity I(110) of the lattice plane (110) are calculated. Here, the peak height intensity means the value at the top of the peak. From the obtained peak height intensities, a ratio represented by (peak height intensity of the lattice plane (004))/(peak height intensity of the lattice plane (110)) is defined as I(004)/I(110).

The conditions for wide-angle X-ray diffraction measurements are as follows. In addition, 2$\theta$ below represents a diffraction angle.

Target: Cu (K$\alpha$ ray) graphite monochromator
Slits: divergence slit = 1/2 degree, receiving slit = 0.04 rad, scattering slit = 1 degree
Measurement range and step angle/measurement time:

Lattice plane (110): 76.5 degrees $\leq$ 2$\theta$ $\leq$ 79 degrees, 0.001 degrees/1 second
Lattice plane (004): 53 degrees $\leq$ 2$\theta$ $\leq$ 56.5 degrees, 0.01 degrees/1 second
Lattice plane (002): 20 degrees $\leq$ 2$\theta$ $\leq$ 30 degrees, 0.07 degrees/1 second

Sample preparation: An electrode is affixed to a glass sample plate with double-sided tape, and measurements are carried out.

Physical Properties of Carbon Material

A volume-based average particle size $D_{50}$ of the carbon material of the present embodiment is preferably from 8 $\mu$m to 20 $\mu$m from the viewpoints of battery capacity and rapid charging characteristics. The volume-based average particle size $D_{50}$ thereof is more preferably 9 $\mu$m or greater, and still more preferably 10 $\mu$m or greater, and is more preferably 19 $\mu$m or less, and still more preferably 18 $\mu$m or less.

In the present specification, the volume-based average particle size $D_{50}$ is a value of a volume-based median size measured by a laser diffraction/scattering-type particle size distribution analyzer.

Specifically, 0.01 g of a sample is suspended in 10 mL of a 0.2 mass% aqueous solution of polyoxyethylene sorbitan monolaurate as a surfactant, the suspension is introduced into a laser diffraction/scattering particle size distribution analyzer and irradiated with ultrasonic waves of 28 kHz at an output power of 60 W for 1 minute, and then a volume-based median size in the measuring apparatus is measured.

The carbon material of the present embodiment preferably satisfies the following expression (1);

$$0 \leq (x - y) \leq 7 \ (1)$$

where x [$\mu$m] denotes a volume-based average particle size D50 of the carbon material and y [mass%] denotes a content of the amorphous carbonaceous substance in the carbon material.

When the above expression (1) is satisfied, a negative electrode material having an appropriate ratio of graphite or amorphous substance in the negative electrode material can be advantageously obtained. Here, (x - y) is more preferably 5 or less.

The carbon material of the present embodiment preferably satisfies the following expression (2);

$$0.5 < y/x \ (2)$$

where x [$\mu$m] denotes the volume-based average particle size $D_{50}$ of the carbon material of the present embodiment and y [mass%] denotes the content of the amorphous carbonaceous substance in the carbon material.

When the above expression (2) is satisfied, a negative electrode material having an appropriate ratio of graphite or amorphous substance in the negative electrode material can be advantageously obtained. Here, y/x is more preferably 0.60 or greater, and even more preferably 0.65 or greater, and is preferably 2.0 or less, more preferably 1.5 or less, and even more preferably 1.0 or less.

Method for Manufacturing Carbon Material

The method for manufacturing the carbon material of the present embodiment includes the following steps (1) to (3), and
in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 g/cm$^3$, an orientation parameter intensity ratio represented by I(002)/I(110) is from 200 to 1200, where I(110) is the peak intensity corresponding to a lattice plane (110) and I(002) is the peak intensity corresponding to a lattice plane (002), and I(002) and I(110) are obtained by wide-angle X-ray diffraction measurements.

Step (1): spheroidizing natural graphite
Step (2): subjecting the raw carbon material obtained in step (1) to an isotropic pressurization treatment
Step (3): coating the raw carbon material obtained in step (2) with an amorphous carbonaceous substance

Hereinafter, the steps (1) to (3) will be described, but the method for manufacturing a carbon material of the present embodiment may include other steps in addition to the steps (1) to (3).

Step (1): Spheroidizing Natural Graphite

Step (1) is a step of spheroidizing natural graphite. Excellent rapid charging/discharging characteristics are achieved by spheroidizing the natural graphite.

The step (1) includes a step (1-3) described below, and may include steps (1-1), (1-2), and (1-4) described below.

Step (1-1): Adjustment of Natural Graphite Particle Size

The step (1) may include a step (1-1) of adjusting the particle size of the natural graphite. The method for adjusting the particle size of the natural graphite is not particularly limited, and examples thereof include pulverization, disintegration, and classification. Pulverization is preferable because the particle size can be easily adjusted to the target particle size. Known methods can be used for pulverization, disintegration, and classification.

That is, the step (1) may be a step of pulverizing natural graphite and then spheroidizing the pulverized natural graphite.

The volume-based average particle size ($D_{50}$) of the natural graphite after the particle size has been adjusted is preferably from 5 $\mu$m to 20 $\mu$m from the viewpoint of the ease of the spheroidization treatment.

Step (1-2): Mixing of Natural Graphite and Granulating Agent

Step (1) may include a step (1-2) of mixing the natural graphite and a granulating agent. The granulating agent is preferably in liquid form when the natural graphite is subjected to the spheroidization treatment.

In addition, the granulating agent preferably contains an organic compound that becomes amorphous carbon. Furthermore, the granulating agent is preferably a granulating agent containing no organic solvent, a granulating agent containing organic solvents, at least one type of the organic solvents having no flash point, or a granulating agent containing an organic solvent and having a flash point of 5°C or higher.

With the granulating agent satisfying the above requirements, when the natural graphite is subjected to the spheroidization treatment, the granulating agent forms liquid bridges between the natural graphite particles, and the capillary negative pressure of the liquid bridges and the surface tension of the liquid create an attractive force between the natural graphite particles. This will result in a shortened distance between natural graphite particles.

Examples of the method for mixing the natural graphite with the granulating agent include a method in which the natural graphite and the granulating agent are mixed using a mixer or a kneader, and a method in which the natural graphite is added to a solution in which the granulating agent is dissolved and then the solvent is removed. Among these methods, the method in which the natural graphite and the granulating agent are mixed using a mixer or a kneader is preferred because micropores of from 1 nm to 4 nm can be efficiently reduced.

From viewpoints of suppressing a decrease in the degree of spheroidization due to a decrease in attractive force between the natural graphite particles, and of suppressing a decrease in productivity caused by adhesion of the natural graphite to an apparatus, the addition amount of the granulating agent per 100 parts by mass of the natural graphite is preferably 0.1 parts by mass or more, more preferably 1 part by mass or more, and even more preferably 10 parts by mass or more, and is preferably 1000 parts by mass or less, more preferably 100 parts by mass or less, and even more preferably 50 parts by mass or less.

Step (1-3): Spheroidization of Natural Graphite

Step (1) includes a step (1-3) of spheroidizing natural graphite. Excellent rapid charging/discharging characteristics are achieved by spheroidizing the natural graphite.

The method for spheroidizing the natural graphite is preferably a method in which a mechanical energy is applied to spheroidize the natural graphite because with such a method, the shape of the particles is easily controlled.

Examples of the mechanical energy include impact, compression, friction, and shear force. One type of these mechanical energies may be used alone or two or more thereof may be used in combination.

In the method of spheroidizing the natural graphite by applying a mechanical energy, an apparatus for applying the mechanical energy may be used.

The viscosity of the granulating agent when spheroidizing the natural graphite is preferably 1 cP or higher, more preferably 5 cP or higher, even more preferably 10 cP or higher, and particularly preferably 20 cP or higher, and is preferably 1000 cP or lower, more preferably 800 cP or lower, even more preferably 600 cP or lower, and particularly preferably 500 cP or lower. This is because re-detachment from spheroidized particles due to an impact force with a rotor or a casing during the spheroidization treatment can be suppressed, micropores can be reduced as the granulating agent enters the micropores of from 1 nm to 4 nm to form amorphous carbon, and excellent low-temperature input-output characteristics and high-temperature storage characteristics are achieved.

The viscosity of the granulating agent when the natural graphite is subjected to the spheroidization treatment can be adjusted by controlling the amount of the organic solvent and the temperature of the spheroidization treatment.

In the present specification, the viscosity is a value measured at 25°C using a rheometer. In a case where the shearing stress at a shearing speed of 100 s$^{-1}$ is 0.1 Pa or more, the value measured at a shearing speed of 100 s$^{-1}$ is used. In a case where the shearing stress at a shearing speed 100 s$^{-1}$ is less than 0.1 Pa, the value measured at a shearing speed 1000 s$^{-1}$ is used. In a case where the shearing stress at a shearing speed 1000 s$^{-1}$ is less than 0.1 Pa, the value measured at the shearing speed at which the shearing stress is 0.1 Pa or more is used.

When the natural graphite is subjected to the spheroidization treatment, the natural graphite may be granulated in the presence of an additional substance. Examples of the additional substance include metals that can be alloyed with lithium, oxides thereof, amorphous carbon, and raw coke.

When the natural graphite is subjected to the spheroidization treatment, it is preferable to perform the spheroidization treatment while fine powder generated during the spheroidization treatment is attached to the surface of the natural graphite. When the natural graphite is coated with an amorphous carbonaceous substance, voids in the natural graphite can be effectively reduced by carrying out the spheroidization treatment while fine powder generated during the spheroidization treatment is attached to the surface of the natural graphite. In addition, the amount of edges that can be used as sites for insertion and desorption of lithium ions is increased, the electrolytic solution is efficiently distributed to voids in the carbon material, and excellent low-temperature input-output characteristics and cycle characteristics are achieved.

The fine powder may be fine powder generated during the spheroidization treatment. Alternatively, fine powder having an adjusted particle size may be added separately.

To effectively attach the fine powder to the surface of the natural graphite, it is preferable to increase the attractive force between the natural graphite particles, between the natural graphite particles and the fine powder particles, and between the fine powder particles.

Examples of the attractive force between particles include a van der Waals force or an electrostatic attractive force without intervention of an interparticle inclusion, and a physical crosslinking force or chemical crosslinking force with intervention of an interparticle inclusion.

The van der Waals force comes to satisfy a condition of [own weight] < [attractive force], with the volume-based average particle size ($D_{50}$) of 100 $\mu$m as a turnaround point, and the smaller the volume-based average particle size, the larger the attractive force. Accordingly, a decrease in the volume-based average particle size of the raw carbon material leads to an increase in the attractive force between particles, and the fine powder is likely to adhere to the carbon material and to be included in the spheroidized carbon material, which is preferred.

Step (1-2) and step (1-3) may be carried out at the same time by charging the natural graphite and the granulating agent into a spheroidization treatment apparatus.

Step (1-4): Removal of Granulating Agent

Step (1) may include a step (1-4) of removing the granulating agent.

The granulating agent may be removed completely or partially.

In a case where a granulating agent containing an organic solvent is used, it is preferable to remove the organic solvent as well.

Examples of the method for removing the granulating agent or the method for removing the organic solvent include a method of washing with a solvent and a method of heating to volatilize or decompose the granulating agent or the organic solvent. Among these methods, the method of heating to volatilize or decompose the granulating agent or the organic solvent is preferred because of excellent productivity and removal efficiency.

Step (2): Isotropically Pressurizing Raw Carbon Material Obtained in Step (1)

Step (2) is a step of subjecting the raw carbon material obtained in step (1) to an isotropic pressurization treatment. The raw carbon material obtained in step (1) means the natural graphite subjected to the spheroidization treatment. When the raw carbon material is subjected to the isotropic pressurization treatment, excellent rapid charging/discharging characteristics are obtained.

Examples of the pressurizing means include a hydrostatic isotropic pressurization treatment using water as a pressurizing medium, and an isotropic pressurization treatment by pneumatic pressure using a gas such as air as a pressurizing medium.

From the viewpoint of obtaining a balance between rapid charging/discharging characteristics and ease of electrode plate formation, the pressure for pressurization is preferably from 50 MPa to 300 MPa, is preferably 50 MPa or greater, more preferably 100 MPa or greater, and even more preferably 150 MPa or greater, and is preferably 300 MPa or less, more preferably 280 MPa or less, and even more preferably 260 MPa or less.

Step (3): Coating Raw Carbon Material Obtained in Step (2) with Amorphous Carbonaceous Substance

Step (3) is a step of coating the raw carbon material obtained in step (2) with an amorphous carbonaceous substance. The raw carbon material obtained in step (2) means the spheroidized natural graphite that has been subjected to the isotropic pressurization treatment.

When the raw carbon material is coated with the amorphous carbonaceous substance, a side reaction between the negative electrode and the electrolytic solution can be suppressed, and a high capacity and excellent low-temperature input-output characteristics and high-temperature storage characteristics are achieved.

The amorphous carbonaceous substance refers to carbon having a d002 value of 0.340 nm or more.

The method for coating the raw carbon material with the amorphous carbonaceous substance is preferably a method in which the raw carbon material and an amorphous carbonaceous substance precursor are mixed and heated in a non-oxidizing atmosphere for amorphous carbonization of the amorphous carbonaceous substance precursor. Such a method is preferable because an excessive side reaction with the electrolytic solution is suppressed, and excellent initial charging/discharging efficiencies are achieved.

Examples of the method for mixing the raw carbon material and the amorphous carbonaceous substance precursor include a method in which the raw carbon material and the amorphous carbonaceous substance precursor are mixed using a mixer or a kneader, and a method in which the raw carbon material is added to a solution in which the amorphous carbonaceous substance precursor is dissolved and then the solvent is removed. Among these methods, the method in which the raw carbon material and the amorphous carbonaceous substance precursor are mixed using a mixer or a kneader is preferred because micropores of 1 nm to 4 nm can be efficiently reduced.

The atmosphere during heating is not particularly limited as long as it is a non-oxidizing atmosphere. However, the atmosphere is preferably nitrogen, argon, or carbon dioxide, and more preferably nitrogen, because generation of micropores due to oxidation can be suppressed.

From the viewpoint of the development efficiency of the carbon structure from the amorphous carbonaceous substance precursor, the oxygen concentration is preferably 1 vol.% or less, and more preferably 0.1 vol.% or less.

The heating temperature for amorphous carbonization of the amorphous carbonaceous substance precursor is not particularly limited as long as it is not a temperature at which the amorphous carbonaceous substance precursor does not form a crystal structure equivalent to the crystal structure of graphite. The heating temperature is preferably from 500°C to 2000°C, and is preferably 500°C or higher, more preferably 600°C or higher, and even more preferably 700°C or higher, and is preferably 2000°C or lower, more preferably 1800°C or lower, and even more preferably 1600°C or lower.

From the viewpoint of achieving a good balance between manufacturing efficiency and the degree of carbon structure development of the amorphous carbonaceous substance precursor, the heating time is preferably from 0.1 hours to 1000 hours, and is preferably 0.1 hours or longer and more preferably 1 hour or longer, and is preferably 1000 hours or shorter and more preferably 100 hours or shorter.

Examples of the amorphous carbonaceous substance precursor include tar, pitch, aromatic hydrocarbons such as naphthalene and anthracene, and thermoplastic resins such as phenolic resins and polyvinyl alcohol resins. One of these precursors may be used alone, or two or more thereof may be used in combination. Among these precursors, tar, pitch, and aromatic hydrocarbons are preferred because a carbon structure is easily developed and coating can be carried out with a small amount, and of these, in order to satisfy particularly expression (1), those precursors having a residual carbon content of 50% or more are more preferred, and those having a residual carbon content of 60% or more are even more preferred.

In order to satisfy expression (1), an ash content in the amorphous carbonaceous substance precursor per 100 mass% of the amorphous carbonaceous substance precursor is preferably from 0.00001 mass% to 1 mass%, and is preferably 0.00001 mass% or greater, and preferably 1 mass% or less, more preferably 0.5 mass% or less, and even more preferably 0.1 mass% or less.

From the viewpoint of the efficiency of carbon structure development of the amorphous carbonaceous substance precursor, a metal impurity content in the amorphous carbonaceous substance precursor is preferably from 0.1 ppm by mass to 1000 ppm by mass, and is preferably 0.1 ppm by mass or more, and preferably 1000 ppm by mass or less, more preferably 500 ppm by mass or less, and even more preferably 100 ppm by mass or less.

In the present specification, the metal impurity content is a value obtained by dividing a total content of Fe, Al, Si, and Ca in the amorphous carbonaceous substance precursor by the residual carbon content.

From the viewpoint of the efficiency of carbon structure development of the amorphous carbonaceous substance precursor, a quinoline insoluble content (Qi) in the amorphous carbonaceous substance precursor per 100 mass% of the amorphous carbonaceous substance precursor is preferably 5 mass% or less and more preferably 3 mass%.

The graphite particles in which the natural graphite is coated with the amorphous carbonaceous substance are manufactured by the steps (1) to (3) described above.

The method for manufacturing a carbon material of the present embodiment preferably further includes a step (4).

Step (4): Mixing Raw Carbon Material Different from Raw Carbon Material Obtained in Step (2) or Step (3) with Graphite Particles Obtained in Step (3)

Step (4) is a step of mixing a raw carbon material different from the raw carbon material obtained in step (2) or step (3) with the graphite particles obtained in step (3). As the raw carbon material different from the raw carbon material obtained in step (2) or step (3), a known raw carbon material can be used. Examples of methods for mixing the raw carbon material and the graphite particles include, but are not limited to, a method of mixing the raw carbon material and the graphite particles using a mixer or a kneader.

The method for manufacturing a carbon material of the present embodiment preferably includes adjusting the carbon material such that the carbon material satisfies the following expression (3);

$$0.5 < y/x \ (3)$$

where x [$\mu$m] denotes the volume-based average particle size $D_{50}$ of the carbon material and y [mass%] denotes the content of the amorphous carbonaceous substance in the carbon material.

It is preferable that the above-described step (1) and/or step (3) includes adjusting the carbon material such that the carbon material satisfies the following expression (3).

When the above expression (3) is satisfied, a negative electrode material having an appropriate ratio of graphite or amorphous substance in the negative electrode material can be advantageously obtained. Here, y/x is more preferably 0.60 or greater, and even more preferably 0.65 or greater, and is preferably 2.0 or less, more preferably 1.5 or less, and even more preferably 1.0 or less.

The carbon material produced through steps (1) to (3) or steps (1) to (4) may be pulverized, disintegrated, and classified as necessary to satisfy the prescribed volume-based average particle size range.

Known methods can be used for pulverization, disintegration, and classification.

Per 100 mass% of the mixture of the raw carbon material obtained in step (2) and the amorphous carbonaceous substance precursor, the content of the amorphous carbonaceous substance precursor in the mixture of the raw carbon material and the amorphous carbonaceous substance precursor is preferably from 0.1 mass to 30 mass%, and, because a more uniform coating state is achieved and excellent charge acceptability is achieved, the content of the amorphous carbonaceous substance precursor is preferably 0.1 mass% or greater, more preferably 1 mass% or greater, and even more preferably 3 mass% or greater. The content of the amorphous carbonaceous substance precursor thereof is also preferably 30 mass% or less, more preferably 20 mass% or less, and even more preferably 15 mass% or less because rollability during formation of an electrode plate is excellent.

The orientation parameter intensity ratio can be adjusted by adjusting the ratio of the raw carbon material and the amorphous carbonaceous substance precursor and setting the ratio of the natural graphite and the amorphous carbonaceous substance in the obtained carbon material to the preferable range as described above.

Negative Electrode

A negative electrode of the present embodiment contains the carbon material of the present embodiment. The negative electrode of the present embodiment includes a current collector and an active material layer formed on the current collector, and the active material layer preferably contains the carbon material of the present embodiment. The carbon material of the present embodiment has an effect as the active material of the negative electrode.

The method for manufacturing the negative electrode of the present embodiment is not particularly limited as long as the active material layer can be formed on the current collector. However, from the perspective of manufacturing the negative electrode at a low cost with excellent productivity, the manufacturing method preferably includes a step of applying the carbon material of the present embodiment onto the current collector, and more preferably includes a step in which a slurry obtained by blending the carbon material of the present embodiment, a binder resin, and a dispersion medium is applied onto the current collector and dried. The slurry may further contain a thickener.

Examples of the binder resin include rubber-like polymers such as styrene-butadiene rubber (hereinafter, also referred to as SBR), isoprene rubber, and ethylenepropylene rubber; synthetic resins such as polyethylene, polypropylene, polyethylene terephthalate, polyimides, polyacrylic acid, and aromatic polyamides; thermoplastic elastomers such as styrene-butadiene-styrene block copolymers and hydrogenated products thereof, styrene-ethylene-butadiene, styrene copolymers, styrene-isoprene, and styrene block copolymers and hydrides thereof; soft resin-like polymers such as syndiotactic 1,2-polybutadiene, ethylene-vinyl acetate copolymers, and copolymers of ethylene and $\alpha$-olefins having from 3 to 12 carbons; fluorinated polymers such as tetrafluoroethylene-ethylene copolymers, polyvinylidene fluoride, polypentafluoropropylene, and polyhexafluoropropylene; N-methylpyrrolidone, and dimethylformamide. Moreover, SBR is preferable from the viewpoint of being stable in a nonaqueous electrolytic solution and being insoluble in water.

Examples of the dispersion medium include water and organic solvents such as N-methylpyrrolidone, and water is preferable from the viewpoint of equipment management in electrode production.

Examples of the thickener include water-soluble celluloses such as carboxymethyl cellulose (hereinafter, also referred to as CMC), methyl cellulose, hydroxyethyl cellulose, and hydroxypropyl cellulose, polyvinyl alcohol, and polyethylene glycol, and CMC is preferable from the viewpoint of application stability.

The current collector is preferably a metal current collector from the viewpoint of reducing resistance. Examples of the metal current collector include metal thin films such as a copper foil, a rolled copper foil, an electrolytic copper foil, and a stainless steel foil, and a copper foil is preferable from the viewpoint of the operating potential.

Preferably, a slurry obtained by blending the carbon material of the present embodiment, a binder resin, and a dispersion medium is applied onto the current collector and dried, after which the resultant product is pressed to increase the density of the active material layer formed on the current collector and thereby increase the battery capacity per unit volume of the active material layer. Examples of the pressing method include roll pressing using a roller.

The density of the active material layer is preferably from 1.2 $g/cm^3$ to 2.0 $g/cm^3$, and is preferably 1.2 $g/cm^3$ or more and more preferably 1.5 $g/cm^3$ or more because a reduction in battery capacity due to an increase in the thickness of the electrode plate can be suppressed. The density thereof is also preferably 2.0 $g/cm^3$ or less and more preferably 1.8 $g/cm^3$ or less because the amount of an electrolytic solution held in voids decreases due to a decrease in voids in the electrode plate, the migration of alkali ions such as lithium ions decreases, and a deterioration of rapid charging/discharging characteristics can be suppressed.

Secondary Battery

The secondary battery of the present embodiment is the same as a lithium-ion secondary battery known in the art, and usually includes: a positive electrode and a negative electrode both capable of storing and releasing lithium ions; and an electrolyte.

Examples of the negative electrode included in the secondary battery include a negative electrode that has been obtained by the method for manufacturing a negative electrode of the present embodiment, a negative electrode to be obtained by the method for manufacturing a negative electrode of the present embodiment, and the negative electrode of the present embodiment.

As the positive electrode, a known positive electrode can be used, and a positive electrode obtained by forming a positive electrode active material layer containing a positive electrode active material and a binder on a current collector may be used.

As the electrolyte, a known electrolyte can be used, and examples thereof include a nonaqueous electrolytic solution obtained by dissolving a lithium salt in a nonaqueous solvent, and an electrolyte obtained by forming this nonaqueous electrolytic solution into a gel form, a rubber form, or a solid sheet form using an organic polymer compound or the like.

A porous separator such as a porous film or a nonwoven fabric may be interposed between the positive electrode and the negative electrode in order to prevent a short circuit between the electrodes. In this case, the nonaqueous electrolytic solution is impregnated into a porous separator and used. The secondary battery of the present embodiment is preferably a nonaqueous secondary battery.

The method for manufacturing the secondary battery above includes a step of applying the carbon material onto a current collector to produce a negative electrode. In the method for manufacturing the secondary battery, the negative electrode is preferably obtained by the method described above for manufacturing the negative electrode.

From the viewpoint of the efficiency of the transfer reaction of lithium ions, the secondary battery has a diffusion resistance of preferably 0.6 $\Omega$ or less, and more preferably 0.5 $\Omega$ or less. The method for measuring the diffusion resistance is as described in the examples below.

From the viewpoint of input/output characteristics, the secondary battery preferably has a rapid charging characteristic of 60% or greater, and more preferably 65% or greater. The method for measuring the rapid charging characteristic is as described in the examples below.

Applications

The secondary battery in which the carbon material of the present embodiment is used exhibits suppressed diffusion resistance and excellent rapid charging characteristics. Therefore, the carbon material of the present embodiment can be suitably used as an active material of a negative electrode of a secondary battery, can be more suitably used as an active material of a negative electrode of a nonaqueous secondary battery, and can be particularly suitably used as an active material of a negative electrode of a lithium-ion secondary battery.

Examples

Hereinafter, the present invention will be more specifically described with reference to examples, but the present invention is not limited to the examples below as long as a departure from the gist of the present invention does not occur.

Measurement of Volume-Based Average Particle Size $D_{50}$

An amount of 0.01g of a sample was suspended in 10 mL of a 0.2 mass% aqueous solution of polyoxyethylene sorbitan monolaurate (product name: "Tween (trade name) 20", available from FUJIFILM Wako Pure Chemical Corporation), which is a surfactant. The aqueous solution containing the sample thus prepared in this manner was introduced into a laser diffraction/scattering particle size distribution analyzer (model name "LA-920", available from Horiba, Ltd.) and treated with ultrasonic waves of 28 kHz at an output power of 60 W for 1 minute, after which the volume-based median size in the analyzer was measured, and the measured volume-based median size was taken as the volume-based average particle size $D_{50}$.

Raw carbon materials and carbon materials obtained in the below-described examples and comparative examples were used as the above sample.

Calculation of x - y Value and y/x Value

An x - y value and a y/x value were calculated with x [$\mu$m] representing the volume-based average particle size $D_{50}$ of the carbon material, and y [mass%] representing the content of the amorphous carbonaceous substance in the carbon material.

Preparation of Negative Electrode Sheet

Electrodes (negative electrode sheets) having an active material layer with an active material layer density of $1.65 \pm 0.03$ g/cm$^3$ were produced using the carbon materials obtained in the below-described examples and comparative examples as the negative electrode active materials.

Specifically, $50.00 \pm 0.02$ g of the carbon material produced in each of the examples and comparative examples was mixed with $50.00 \pm 0.02$ g (0.50 g on a solid basis) of a 1 mass% aqueous sodium carboxymethyl cellulose solution and $1.00 \pm 0.05$ g (0.50 g on a solid basis) of an aqueous styrene-butadiene rubber dispersion having a weight average molecular weight of 270000 with stirring for 5 minutes using a hybrid mixer (available from Keyence Corporation), after which the mixture was defoamed for 30 seconds, and a slurry (containing water as a dispersion medium) was obtained.

The prepared slurry was applied at a width of 10 cm onto a 10 $\mu$m-thick copper foil as a current collector using a die coater such that $10.00 \pm 0.20$ mg/cm$^2$ of the negative electrode material was attached to the copper foil, and the applied slurry was then dried. Subsequently, the current collector coated with the negative electrode material was cut to a width of 5 cm and roll-pressed using a roller having a diameter of 20 cm to adjust the density of the active material layer to 1.65 g/cm$^3$ $\pm$ 0.03 g/cm$^3$, and a negative electrode (negative electrode sheet) was thereby obtained.

Measurement of Orientation Parameter Intensity Ratio

The obtained electrode (negative electrode sheet) was subjected to a wide-angle X-ray diffraction measurement to measure I(002)/I(110) and I(004)/I(110), which are the orientation parameter intensity ratios of the carbon material of the active material layer.

Specifically, the X-ray diffraction pattern obtained by the wide-angle X-ray diffraction measurement was fitted with an asymmetric Pearson VII peak function as a profile function to separate peaks, and the peak height intensities of the lattice plane (110), the lattice plane (004), and the lattice plane (002) were calculated.

From the obtained height intensities, the ratio represented by (height intensity of the lattice plane (002))/(height intensity of the lattice plane (110)) was defined as I(002)/I(110), and the ratio represented by (height intensity of the lattice plane (004))/(height intensity of the lattice plane (110)) was defined as I(004)/I(110).

The conditions for the X-ray diffraction measurements were as follows. In addition, $2\theta$ below represents the diffraction angle.

Target: Cu (K$\alpha$ ray) graphite monochromator
Slits: divergence slit = 1/2 degree, receiving slit = 0.04 rad, scattering slit = 1 degree
Measurement range and step angle/measurement time:

Lattice plane (110): 76.5 degrees $\leq 2\theta \leq$ 79 degrees, 0.001 degrees/1 second
Lattice plane (004): 53 degrees $\leq 2\theta \leq$ 56.5 degrees, 0.01 degrees/1 second
Lattice plane (002): 20 degrees $\leq 2\theta \leq$ 30 degrees, 0.07 degrees/1 second

Sample preparation: An electrode was affixed to a glass sample plate with double-sided tape, and measurements were carried out.

Preparation of Positive Electrode Sheet

85 mass% of lithium nickel manganese cobalt oxide (LiNiMnCoO$_2$) as a positive electrode active material was mixed with 10 mass% of acetylene black as an electrically conductive material and 5 mass% of polyvinylidene fluoride (PVdF) as a binder in N-methylpyrrolidone to prepare a slurry.

The prepared slurry was applied onto a 15 μm-thick aluminum foil as a current collector using a blade coater such that 22.5 ± 0.2 mg/cm$^2$ of the positive electrode material formed from LiNiMnCoO$_2$, acetylene black, and PVdF was attached to the aluminum foil, and the applied slurry was then dried at 130°C. In addition, the resulting product was roll pressed to adjust the density of the positive electrode material to 2.60 ± 0.05 g/cm$^3$, and a positive electrode sheet was thereby obtained.

Preparation of Sheet-Shaped Secondary Battery

The prepared negative electrode sheet, a separator made of polyethylene, and the prepared positive electrode sheet were laminated in this order. The obtained laminate was wrapped in a cylindrical aluminum laminate film, and an electrolytic solution in which LiPF$_6$ was dissolved to a molar concentration of 1 mol/L in a mixed solvent of ethylene carbonate, dimethyl carbonate, and ethyl methyl carbonate (volume ratio 30:30:40) was injected into the wrapped laminate, which was then vacuum sealed, and thereby a sheet-shaped nonaqueous secondary battery was prepared. To increase adherence between the electrodes, the sheet-shaped secondary battery was sandwiched between glass plates and pressurized.

Measurement of Negative Electrode Basis Weight

A negative electrode basis weight was obtained by measuring the amount of active material per unit area of the negative electrode sheet.

Electrode Plate Density

An electrode plate density was obtained by measuring the amount of active material per unit volume of the negative electrode sheet.

Measurement of Diffusion Resistance

The prepared sheet-shaped secondary battery not yet subjected to a charging/discharging cycle was subjected to initial charging/discharging at 25°C for three cycles in a voltage range of 4.1 V to 3.0 V at a current value of 0.2 C and for two cycles in a voltage range of 4.2 V to 3.0 V at a current value of 0.2 C (constant-voltage charging at 4.2 V was further implemented for 2.5 hours during charging). Further, the battery was charged at a current value of 0.2 C until the state-of-charge (SOC) reached 50%, and then discharged at 25°C at current values of 1/3 C, 1.0 C, and 3.0 C for 10 seconds each, and the voltage drop after each 10-second discharge was measured. The direct current internal resistance (DCIR) was then calculated from the slope of the voltage drop (V) - current value (A) curve obtained from the above.

Furthermore, using the AC impedance method at 25°C, a Nyquist plot was obtained for the sheet-shaped secondary battery by plotting the impedance and phase difference on a complex plane when the AC frequency was changed from 0.02 Hz to 20000 Hz. From the Nyquist plot, the resistance on the high frequency side accounting for the transfer resistance of the members and the electrolytic solution and the resistance derived from the charge transfer reaction, was defined as the reaction resistance of the secondary battery.

The difference between the DCIR and the reaction resistance was then defined as the diffusion resistance (Ω).

Measurement of Rapid Charging Characteristics

The prepared sheet-shaped secondary battery not yet subjected to a charging/discharging cycle was subjected to initial charging/discharging at 25°C for three cycles in a voltage range of 4.1 V to 3.0 V at a current value of 0.2 C and for two cycles in a voltage range of 4.2 V to 3.0 V at a current value of 0.2 C (constant-voltage charging at 4.2 V was further implemented for 2.5 hours during charging). Furthermore, constant-current charging was carried out at a current value of 0.2 C to a voltage of 4.2 V, after which constant-voltage charging was further implemented at 4.2 V for 2.5 hours, and then constant-current discharging was implemented at 3 C to a voltage of 3.0 V. A value obtained by the ratio of the discharge capacity during discharging at 3 C to the discharge capacity during discharging at 0.2 C, multiplied by 100, (that is, 3 C / 0.2 C × 100) was defined as the rapid charging characteristic (%).

Example 1

Scaly natural graphite having a volume-average particle size $D_{50}$ of 100 $\mu$m was pulverized to prepare a raw carbon material having a volume-average particle size $D_{50}$ of 11 $\mu$m. Next, 100 parts by mass of the prepared raw carbon material was mixed with 12 parts by mass of a granulating agent, after which the mixture was subjected to a spheroidization treatment, and the granulating agent was removed by heat treatment, and thereby a spheroidized carbon material was obtained. The prepared spheroidized carbon material was charged in a rubber container, the rubber container was sealed, and an isotropic pressurization treatment was carried out at 200 MPa, after which the resultant product was subjected to a disintegration and classification treatment, and a spheroidized carbon material powder was obtained. The prepared spheroidized carbon material powder was mixed with pitch (ash content: 0.02 mass%, metal impurity content: 20 ppm by mass, Qi: 1 mass%) as an amorphous carbonaceous substance precursor, and the pressure inside the furnace was reduced to 10 torr or less and then returned to atmospheric pressure with nitrogen. Nitrogen was then further circulated to reduce the oxygen concentration inside the furnace to 0.01 vol.% or less, and a heat treatment was carried out at 1300°C in the inert gas atmosphere. The resultant fired product was disintegrated and classified, and a carbon material was obtained. In Example 1, the content of graphite particles was 100 mass% per 100 mass% of the carbon material.

The content of the amorphous carbonaceous substance in the obtained carbon material was confirmed to be 11 mass% from the firing yield.

The evaluation results of the produced carbon material are shown in Table 1.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 21.3.

The value of x - y calculated from the evaluation results of the carbon material was 6, and the value of y/x was 0.65.

Example 2

Scaly natural graphite having a volume-average particle size $D_{50}$ of 100 $\mu$m was pulverized to prepare a raw carbon material having a volume-average particle size $D_{50}$ of 9 $\mu$m. Next, 100 parts by mass of the prepared raw carbon material was mixed with 12 parts by mass of a granulating agent, after which the mixture was subjected to a spheroidization treatment, and the granulating agent was removed by heat treatment, and thereby a spheroidized carbon material was obtained. The prepared spheroidized carbon material was charged in a rubber container, the rubber container was sealed, and an isotropic pressurization treatment was carried out at 200 MPa, after which the resultant product was subjected to a disintegration and classification treatment, and a spheroidized carbon material powder was obtained. The prepared spheroidized carbon material powder was mixed with pitch (ash content: 0.02 mass%, metal impurity content: 20 ppm by mass, Qi: 1 mass%) as an amorphous carbonaceous substance precursor, and the pressure inside the furnace was reduced to 10 torr or less and then returned to atmospheric pressure with nitrogen. Nitrogen was then further circulated to reduce the oxygen concentration inside the furnace to 0.01 vol.% or less, and a heat treatment was carried out at 1300°C in the inert gas atmosphere. The resultant fired product was disintegrated and classified, and a carbon material was obtained. In Example 2, the content of graphite particles was 100 mass% per 100 mass% of the carbon material.

The content of the amorphous carbonaceous substance in the obtained carbon material was confirmed to be 8 mass% from the firing yield.

The evaluation results of the produced carbon material are shown in Table 1.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 23.8.

The value of x - y calculated from the evaluation results of the carbon material was 5, and the value of y/x was 0.62.

Comparative Example 1

Scaly natural graphite having a volume-average particle size $D_{50}$ of 100 $\mu$m was pulverized to prepare a raw carbon material having a volume-average particle size $D_{50}$ of 9 $\mu$m. Next, 100 parts by mass of the prepared raw carbon material was mixed with 12 parts by mass of a granulating agent, after which the mixture was subjected to a spheroidization treatment, and the granulating agent was removed by heat treatment, and thereby a spheroidized carbon material was obtained. The prepared spheroidized carbon material was charged in a rubber container, the rubber container was sealed, and an isotropic pressurization treatment was carried out at 200 MPa, after which the resultant product was subjected to a disintegration and classification treatment, and a spheroidized carbon material powder was obtained. The prepared spheroidized carbon material powder was mixed with pitch (ash content: 0.02 mass%, metal impurity content: 20 ppm by mass, Qi: 1 mass%) as an amorphous carbonaceous substance precursor, and the pressure inside the furnace was reduced to 10 torr or less and then returned to atmospheric pressure with nitrogen. Nitrogen was then further circulated to reduce the oxygen concentration inside the furnace to 0.01 vol.% or less, and a heat treatment was carried out at 1300°C in the inert gas atmosphere. The resultant fired product was disintegrated and classified, and a carbon material was obtained. In Comparative Example 1, the content of graphite particles was 100 mass% per 100 mass% of the carbon material.

The content of the amorphous carbonaceous substance in the obtained carbon material was confirmed to be 6 mass% from the firing yield.

The evaluation results of the produced carbon material are shown in Table 1. Note that the carbon material of Comparative Example 1 corresponds to the carbon material disclosed in JP 2021-158044 A.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 29.3.

The value of x - y calculated from the evaluation results of the carbon material was 7, and the value of y/x was 0.46.

Comparative Example 2

A carbon material of Comparative Example 2 was obtained by the same procedures as in Example 1 with the exception that the content of the amorphous carbonaceous substance in the obtained carbon material was 8 mass%. In Comparative Example 2, the content of graphite particles was 100 mass% per 100 mass% of the carbon material.

The evaluation results of the produced carbon material are shown in Table 1.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 43.1.

The value of x - y calculated from the evaluation results of the carbon material was 8, and the value of y/x was 0.50.

Comparative Example 3

A carbon material of Comparative Example 3 was obtained by the same procedures as in Example 1 with the exception that a raw carbon material having a volume-average particle size $D_{50}$ of 10 $\mu$m was used, pitch (ash content: 0.02 mass%, metal impurity content: 20 ppm by mass, Qi: 1 mass%) was used, and the content of the amorphous carbonaceous substance in the obtained carbon material was 10 mass%. In Comparative Example 3, the content of graphite particles was 100 mass% per 100 mass% of the carbon material.

The evaluation results of the produced carbon material are shown in Table 1.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 123.6.

The value of x - y calculated from the evaluation results of the carbon material was 0, and the value of y/x was 1.0.

Comparative Example 4

A carbon material of Comparative Example 4 was obtained by the same procedures as in Example 1 with the exception that a raw carbon material having a volume-average particle size $D_{50}$ of 16 $\mu$m was used, pitch (ash content: 0.02 mass%, metal impurity content: 20 ppm by mass, Qi: 1 mass%) was used, and the content of the amorphous carbonaceous substance in the obtained carbon material was 10 mass%. In Comparative Example 4, the content of graphite particles was 100 mass% per 100 mass% of the carbon material.

The evaluation results of the produced carbon material are shown in Table 1.

Results obtained by evaluating a secondary battery provided with a negative electrode sheet produced under the conditions described in the table and containing the obtained carbon material are presented in Table 2.

The orientation parameter intensity ratio represented by I(004)/I(110) of the carbon material was 92.0.

The value of x - y calculated from the evaluation results of the carbon material was 5, and the value of y/x was 0.67.

[Table 1]

| | Raw Material $D_{50}$ [$\mu$m] | Carbon Material $D_{50}$ [$\mu$m] | 1(002)/1(110) |
|---|---|---|---|
| Example 1 | 11 | 17 | 873 |
| Example 2 | 9 | 13 | 1019 |
| Comparative Example 1 | 9 | 13 | 1222 |
| Comparative Example 2 | 11 | 16 | 1344 |

(continued)

|  | Raw Material $D_{50}$ [µm] | Carbon Material $D_{50}$ [µm] | I(002)/I(110) |
|---|---|---|---|
| Comparative Example 3 | 10 | 10 | 2321 |
| Comparative Example 4 | 16 | 15 | 2703 |

[Table 2]

|  | Negative Electrode Basis Weight [mg/cm²] | Electrode Plate Density [g/cm³] | Diffusion Resistance [Ω] | Rapid Charging Characteristic [%] |
|---|---|---|---|---|
| Example 1 | 10 | 1.54 | 0.35 | 80.9 |
| Comparative Example 3 | 10 | 1.54 | 0.39 | 76.8 |
| Comparative Example 4 | 10 | 1.54 | 0.41 | 73.9 |
| Example 2 | 10 | 1.65 | 0.39 | 71.8 |
| Comparative Example 1 | 10 | 1.65 | 0.41 | 69.4 |
| Comparative Example 2 | 10 | 1.65 | 0.44 | 69.6 |

As is clear from Tables 1 and 2, the carbon materials of the Examples each had an intensity ratio I(002)/I(110) of the orientation parameters in a predetermined range, and thus exhibited excellent lithium ion diffusibility in the direction perpendicular to the current collector in the electrode. Therefore, the diffusion resistance of the secondary batteries was suppressed, and the rapid charging characteristic of the secondary batteries was excellent.

On the other hand, in the carbon material of each of the Comparative Examples, the orientation parameter intensity ratio I(002)/I(110) was not within the predetermined range, and the lithium ion diffusibility in the direction perpendicular to the current collector in the electrode was impaired, and therefore the diffusion resistance of the secondary battery increased, and the rapid charging characteristic of the secondary battery was inferior.

The present invention was described in detail with reference to specific embodiments, but it goes without saying that the present invention is not limited to such examples. It will be apparent to those skilled in the art that various changes and modifications can be made within the scope of the claims, and it should be understood that such changes and modifications naturally fall within the technical scope of the present invention. In addition, the constituent elements in the above-described embodiments may be arbitrarily combined without departing from the gist of the invention.

The present application is based on patent application JP 2023-035960 filed on March 8, 2023, the content of which is incorporated herein by reference.

Industrial Applicability

A secondary battery containing the carbon material of the present embodiment exhibits suppressed diffusion resistance and improved rapid charging characteristics. Therefore, the carbon material of the present embodiment can be suitably used as an active material of a negative electrode of a secondary battery, can be more suitably used as an active material of a negative electrode of a nonaqueous secondary battery, and can be particularly suitably used as an active material of a negative electrode of a lithium-ion secondary battery.

Claims

1.  A carbon material comprising graphite particles, wherein

the graphite particles are natural graphite coated with an amorphous carbonaceous substance, and
in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 g/cm³, an orientation parameter intensity ratio represented by I(002)/I(110) is from 200 to 1200, where I(110) is a peak intensity corresponding to a lattice plane (110) and I(002) is a peak intensity corresponding to a lattice plane (002), and both I(110) and I(002) are obtained by a wide-angle X-ray diffraction measurement.

2. A carbon material, wherein the orientation parameter intensity ratio represented by I(002)/I(110) is from 600 to 1200.

3. The carbon material according to claim 1, wherein in the electrode, an orientation parameter intensity ratio represented by I(004)/I(110) is from 10 to 50, where I(110) is the peak intensity corresponding to the lattice plane (110) and I(004) is a peak intensity corresponding to a lattice plane (004), and I(004) and I(110) are obtained by a wide-angle X-ray diffraction measurement.

4. The carbon material according to claim 1, wherein the carbon material has a volume-based average particle size $D_{50}$ of from 8 μm to 20 μm.

5. The carbon material according to claim 1, wherein a content of the amorphous carbonaceous substance is from 5 mass% to 20 mass% per 100 mass% of the carbon material.

6. The carbon material according to claim 1, wherein the carbon material satisfies the following expression (1);

$$0 \leq (x - y) \leq 7 \ (1)$$

where x [μm] denotes a volume-based average particle size $D_{50}$ of the carbon material and y [mass%] denotes a content of the amorphous carbonaceous substance in the carbon material.

7. The carbon material according to claim 1, wherein the carbon material satisfies the following expression (2);

$$0.5 < y/x \ (2)$$

where x [μm] denotes the volume-based average particle size D50 of the carbon material of the present embodiment and y [mass%] denotes the content of the amorphous carbonaceous substance in the carbon material.

8. The carbon material according to claim 1, wherein a content of the graphite particles contained in the carbon material is from 50 to 100 mass% per 100 mass% of the carbon material.

9. A negative electrode comprising the carbon material described in any one of claims 1 to 8.

10. A secondary battery comprising: a positive electrode and a negative electrode both capable of storing and releasing lithium ions; and an electrolyte, wherein
the negative electrode includes the carbon material described in any one of claims 1 to 8.

11. A method for manufacturing a carbon material, the method comprising the following steps (1) to (3), and
in an electrode fabricated by adding a binder resin and a dispersion medium to the carbon material to form a slurry, applying the slurry to a metal current collector, drying the applied slurry to form an active material layer on the metal current collector, and then pressing the active material layer such that the active material layer has a density of 1.65 g/cm$^3$, an orientation parameter intensity ratio represented by I(002)/I(110) being from 200 to 1200, where I(110) is a peak intensity corresponding to a lattice plane (110) and I(002) is a peak intensity corresponding to a lattice plane (002), I(002) and I(110) are obtained by a wide-angle X-ray diffraction measurement:

Step (1): spheroidizing natural graphite;
Step (2): subjecting a raw carbon material obtained in step (1) to an isotropic pressurization treatment; and
Step (3): coating the raw carbon material obtained in step (2) with an amorphous carbonaceous substance.

12. The method for manufacturing a carbon material according to claim 11,
wherein the step (1) is pulverizing the natural graphite and then spheroidizing the pulverized natural graphite.

13. The method for manufacturing a carbon material according to claim 11, the method further comprising adjusting the carbon material such that the carbon material satisfies the following expression (3);

$$0.5 < y/x \ (3)$$

where x [$\mu$m] denotes the volume-based average particle size D50 of the carbon material and y [mass%] denotes the content of the amorphous carbonaceous substance in the carbon material.

14. A method for manufacturing a negative electrode, the method comprising applying the carbon material described in any one of claims 1 to 8 onto a current collector.

15. A method for manufacturing a secondary battery comprising a positive electrode, a negative electrode, and an electrolyte, the method comprising applying the carbon material described in any one of claims 1 to 8 onto a current collector to manufacture a negative electrode.

## INTERNATIONAL SEARCH REPORT

| | International application No. |
|---|---|
| | **PCT/JP2024/009184** |

### A. CLASSIFICATION OF SUBJECT MATTER

**H01M 4/587**(2010.01)i; **C01B 32/21**(2017.01)i; **H01M 4/36**(2006.01)i; **H01M 4/1393**(2010.01)i
FI:   H01M4/587; H01M4/36 C; H01M4/1393; C01B32/21

According to International Patent Classification (IPC) or to both national classification and IPC

### B. FIELDS SEARCHED

Minimum documentation searched (classification system followed by classification symbols)

H01M4/587; C01B32/21; H01M4/36; H01M4/1393

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2021-158043 A (MITSUBISHI CHEMICAL CORPORATION) 07 October 2021 (2021-10-07)<br>claims, example 3 | 1-15 |
| A | JP 2017-530509 A (LG CHEM, LTD.) 12 October 2017 (2017-10-12)<br>claims | 1-15 |
| A | JP 2004-127913 A (MATSUSHITA ELECTRIC IND. CO., LTD.) 22 April 2004 (2004-04-22)<br>claims | 1-15 |
| A | KR 10-2020-0089642 A (LG CHEM, LTD.) 27 July 2020 (2020-07-27)<br>claims | 1-15 |
| A | JP 2015-038852 A (MITSUBISHI CHEMICAL CORPORATION) 26 February 2015 (2015-02-26)<br>claims | 1-15 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/009184**

| Patent document cited in search report | | | Publication date (day/month/year) | Patent family member(s) | | | Publication date (day/month/year) |
|---|---|---|---|---|---|---|---|
| JP | 2021-158043 | A | 07 October 2021 | (Family: none) | | | |
| JP | 2017-530509 | A | 12 October 2017 | US claims | 2016/0276657 | A1 | |
| | | | | EP | 3054509 | A1 | |
| | | | | KR | 10-2016-0014539 | A | |
| | | | | CN | 105794027 | A | |
| | | | | TW | 201619052 | A | |
| JP | 2004-127913 | A | 22 April 2004 | US claims | 2004/0023115 | A1 | |
| | | | | KR | 10-2004-0012541 | A | |
| | | | | CN | 1481041 | A | |
| KR | 10-2020-0089642 | A | 27 July 2020 | US claims | 2022/0115667 | A1 | |
| | | | | EP | 3893297 | A1 | |
| | | | | CN | 113646927 | A | |
| JP | 2015-038852 | A | 26 February 2015 | US claims | 2015/0194668 | A1 | |
| | | | | EP | 2899782 | A1 | |
| | | | | KR | 10-2015-0058205 | A | |
| | | | | CN | 104904045 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021158044 A

- JP 2023035960 A